# EUROPEAN PATENT SPECIFICATION

(11) **EP 2 227 885 B1**
(45) Date of publication and mention of the grant of the patent: **21.12.2016**
(21) Application number: 08779395.6
(22) Date of filing: 02.07.2008
(51) Int. Cl.: H04W 72/12, H04L 12/835

(54) **COMPRESSED BUFFER STATUS REPORTS IN LTE**
KOMPRIMIERTE PUFFERSTATUSMELDUNGEN IM LTE
RAPPORTS D'ÉTAT DE TAMPON COMPRESSÉ DANS UN SYSTÈME À ACCÈS PAR PAQUETS OFDM HAUT DÉBIT (LTE)

(30) Priority: 04.01.2008 US 18910
(43) Date of publication of application: 15.09.2010
(73) Proprietor: Telefonaktiebolaget LM Ericsson (publ), 164 83 Stockholm (SE)
(72) Inventor: PELLETIER, Ghyslain, S-961 39 Boden (SE); ENBUSKE, Henrik, S-11341 Stockholm (SE); LINDSTRÖM, Magnus, S-163 41 Spånga (SE); PEISA, Janne, FI-02130 Espoo (FI)
(74) Representative: Ericsson
(86) International application number: PCT/SE2008/050817
(87) International publication number: WO 2009/088334

(56) References cited:
- EP-A- 1 511 245
- US-A1- 2002 093 953
- US-A1- 2007 201 369
- "Buffer Reporting for E-UTRAN" 3RD GENERATION PARTNERSHIP PROJECT (3GPP); TECHNICALSPECIFICATION GROUP (TSG) RADIO ACCESS NETWORK (RAN); WORKINGGROUP 2 (WG2), XX, XX, vol. R2-060829, 27 March 2006 (2006-03-27), pages 1-5, XP003013941
- "Universal Mobile Telecommunications System (UMTS); FDD enhanced uplink; Overall description; Stage 2 (3GPP TS 25.309 version 6.6.0 Release 6); ETSI TS 125 309" ETSI STANDARDS, LIS, SOPHIA ANTIPOLIS CEDEX, FRANCE, vol. 3-R2, no. V6.6.0, 1 March 2006 (2006-03-01), XP014034283 ISSN: 0000-0001
- "Universal Mobile Telecommunications System (UMTS); Evolved Universal Terrestrial Radio Access (E-UTRA) and Evolved Universal Terrestrial Radio Access (E-UTRAN); Overall description; Stage 2 (3GPP TS 36.300 version 8.3.0 Release 8); ETSI TS 136 300" ETSI STANDARDS, LIS, SOPHIA ANTIPOLIS CEDEX, FRANCE, vol. 3-R2, no. V8.3.0, 1 January 2008 (2008-01-01), XP014040735 ISSN: 0000-0001

## Description

### TECHNICAL FIELD

The present invention relates to wireless communication networks in general, and in particular relates to methods and apparatus for reporting uplink buffer status information for a wireless device to a wireless network infrastructure.

### BACKGROUND

Radio access technologies for cellular mobile networks are continuously evolving to meet future demands for higher data rates, improved coverage, and increased capacity. An example of recent evolution of Wideband Code-Division Multiple Access (WCDMA) technology is the so-called High-Speed Packet Access (HSPA) developed by the 3rd-Generation Partnership Project (3GPP). Further evolution of 3G systems is ongoing in 3GPP's Long Term Evolution (LTE) initiative, which includes the development and specification of new access technologies and new system architectures. Details of the LTE system are provided in "Evolved Universal Terrestrial Radio Access (E-UTRA) and Evolved Universal Terrestrial Radio Access Network (E-UTRAN); Overall Description, Stage 2, (Release 8)", 3GPP TS 36.300, v. 8.2.0, September 2007.

In LTE, the uplink MAC scheduler resides in the eNodeB (evolved Node B, the LTE base station) and assigns uplink transmission resources (resource blocks) to wireless terminals served by the eNodeB. Furthermore, the scheduler selects the transport format to be used by scheduled wireless terminals, including the modulation and coding schemes to be used. In order to perform these tasks effectively, the scheduler needs information about each terminal's current buffer state, i.e., whether a wireless terminal is currently buffering data in its uplink data queues, and, if so, how much data. The scheduler may also need further information, such as the available power headroom, or the transmit power used to estimate the uplink gain, in order to select a suitable transport format. Very precise and up-to-date scheduling information permits the most accurate scheduling decisions. However, providing this information from the wireless terminal to the eNodeB comes with certain costs, including signaling overhead, which must be balanced against the scheduling efficiencies that such information facilitates.

In practice, comprehensive buffer status information received at a serving eNodeB may frequently be outdated by the time it is used in the scheduling decision. For instance, between the time that buffer status information is transmitted by the wireless terminal and the time that it is actually used by the eNodeB, new data may be buffered in the wireless terminal for a radio bearer having a higher priority than that of any previously buffered radio bearer data. In other cases, data may be dropped from the buffer due to delay constraints. However, without any additional information the scheduler has no indication if the previously scheduled grant was enough, or whether a large amount of data is still left in the buffer. A grant of too many uplink resources results in padding, which may reduce the system capacity, whereas a too small grant causes extra delay. Thus, optimal uplink scheduling requires up-to-date information. However, frequent uplink signaling of buffer status consumes valuable system capacity, which is of special concern in high load situations, where the system is operating close to its capacity limit. Thus, uplink signaling of buffer status should be evaluated carefully with respect to the need for carefully scheduling each mobile terminal (and implicitly each radio bearer) appropriately.

A detailed buffer status report may be quite large in number of bits, and, if transmitted frequently, causes considerable signaling overhead. For many applications, the buffer status is continuously changing - for instance, the TCP protocol frequently increases and decreases its congestion window. In such a scenario, a rough buffer indication that is frequently updated may be more useful than a less frequently updated, but more comprehensive, buffer status.

Buffer reporting mechanisms for LTE are currently being standardized in 3GPP. The general objective of buffer reporting is to report to the eNodeB the amount of data stored in the wireless terminal's buffers for transmission. The eNodeB uses these reports from various wireless terminals to allocate resources to each terminal, and to prioritize resource allocation between different wireless terminals. The objectives of the LTE buffer reporting scheme are described in 3GPP's TS 36.300, v. 8.2.0, as follows:
*Uplink buffer status reports are needed to provide support for QoS-aware packet scheduling. Uplink buffer status reports refer to the data that is buffered in the logical channel queues in the [wireless terminal's] MAC. The uplink packet scheduler in the eNodeB is located at MAC level. Uplink buffer status reports may be transmitted using MAC signaling (e.g. as a specific type of MAC control PDU). A way to separately signal buffer status reports for different QoS classes may be used. To define the exact content of buffer status reports and the possible use of physical layer signaling are FFS [for future study].*
*The buffer reporting scheme used in uplink should be flexible in order to support different types of data services. The buffer reporting criteria are setup and reconfigured on* a *per user basis or per radio bearer basis (FFS) using RRC or MAC signaling (FFS). The use of System Information should also be considered for the initial setup of default buffer reporting criteria (on a per cell basis). Constraints on how often uplink buffer reports are signaled from the wireless terminals can be specified by the network to limit the overhead from sending the reports in the uplink.*

As noted above, it is useful for the eNodeB to have as accurate buffer status as possible, in order to prioritize resource allocations between wireless terminals and to decide how much resources to allocate when scheduling a wireless terminal. However, buffer status reporting may consume a large number of bits; if transmitted frequently, this could represent a considerable overhead.

As of the writing of the above objectives for the LTE buffer scheme, it was still undetermined whether bits in the MAC header should be used to transmit uplink wireless terminal buffer status information. Such bits in the MAC header dedicated to buffer status reports are often referred to as "happy bit(s)". As of the date of the above 3GPP reference, two reserved (R) bits in the MAC header and in the MAC subheader format were available. Accordingly, alternatives proposed within 3GPP include the use of one or two bits in-band with the transmission itself, such as in the MAC header, to signal buffer status. Under one proposal, these bits would indicate the amount of data buffered for a radio bearer corresponding to a MAC SDU (service data unit). In another proposal, these bits would indicate whether there is more data to transmit by the wireless terminal based on prioritized bit rate (PBR) bearers, per MAC SDU. Finally, another proposal suggests that two bits per MAC PDU may be used to indicate the total amount of data in the wireless terminal's buffers.

The 3GPP TSG-RAN WG2 contribution "Buffer reporting for E-UTRAN" R2-060829, describes the use of buffer status reports to support uplink packet scheduling in an E-UTRAN system. A buffer status report contains separate information on the amount of data in each traffic flow and is transmitted as a MAC control PDU, as a stand-alone message or piggybacked to user plane data.

Current solutions for buffer reporting have several problems. First, there is no efficient means for the wireless terminal to report uplink buffer status covering multiple radio bearers of different priorities. Normally, a complete buffer status report can be used for this; as noted above, other proposals include the use of one or two in-band bits (e.g. in MAC header) to indicate whether there is data left in the buffer for a specific bearer, or the total amount of data for the wireless terminal. Second, a detailed buffer status report may be quite large in number of bits and if transmitted frequently would cost considerable overhead.

### SUMMARY

Solutions to these problems are addressed by the various techniques described herein. Disclosed herein are various methods and apparatus for producing a compressed buffer status report. In several of the disclosed embodiments, this compressed buffer status report includes a field of one or more bits that indicate an overall status corresponding to all or substantially all of the uplink data buffers for the wireless terminal, along with one or more fields that indicate buffer status for specific corresponding radio bearers or groups of radio bearers. Accordingly, a small buffer report may be sent in-band with the uplink data transmission, to convey information about the status of the wireless terminal's buffers, both for all the buffers (i.e., collectively), and for each of several high priority radio bearers or groups of radio bearers. Thus, a buffer status reporting method is described where information is continuously sent for radio bearers (or groups of radio bearers) for which data is buffered by the wireless terminal and for which data is being transmitted, in order to avoid over-provisioning of radio resources and padding in the transmissions.

In an exemplary method, a buffer status word is formed, the buffer status word comprising one or more radio bearer status fields indicating status for corresponding radio bearers or groups of radio bearers and a user equipment status field indicating a status corresponding to all or substantially all of the uplink data buffers for the mobile station. The buffer status word is then transmitted to a base station. In some embodiments, the buffer status word is transmitted as header data in one or more data packets or control packets. For example, the buffer status word may be transmitted as one or more fields in a MAC header for a MAC packet data unit.

In some embodiments, a mobile station comprises processing circuits configured to carry out one or more of the methods described herein.

### BRIEF DESCRIPTION OF THE DRAWINGS

Figure 1 illustrates an exemplary LTE wireless communication network.
Figure 2 illustrates an exemplary uplink protocol architecture for a mobile station.
Figure 3 illustrates uplink scheduling functions and related message between a mobile station and an eNodeB according to some embodiments of the invention.
Figure 4 illustrates an exemplary buffer status word comprising a user equipment status field and several radio bearer status fields.
Figure 5 is a logic flow diagram illustrating an exemplary method for providing buffer status information from a mobile station.
Figure 6 is a logic flow diagram illustrating a method for encoding a buffer status field relative to a previously reported status.
Figure 7 is a logic flow diagram illustrating a method for encoding a buffer status field relative to a previous resource allocation.
Figure 8 illustrates a MAC PDU and the encoding of a buffer status word therein.
Figure 9 is a block diagram for an exemplary mobile station according to some embodiments of the present invention.

### DETAILED DESCRIPTION

In the description that follows, inventive techniques for providing buffer status information from a mobile station and using that buffer status information are described in relation to the 3GPP's LTE standardization effort. However, those skilled in the art will appreciate that these techniques may be applied, for example, to other wireless systems where buffer status information is or may be advantageously used for resource allocation decisions. Thus, the following description should be viewed as illustrative, and not limiting.

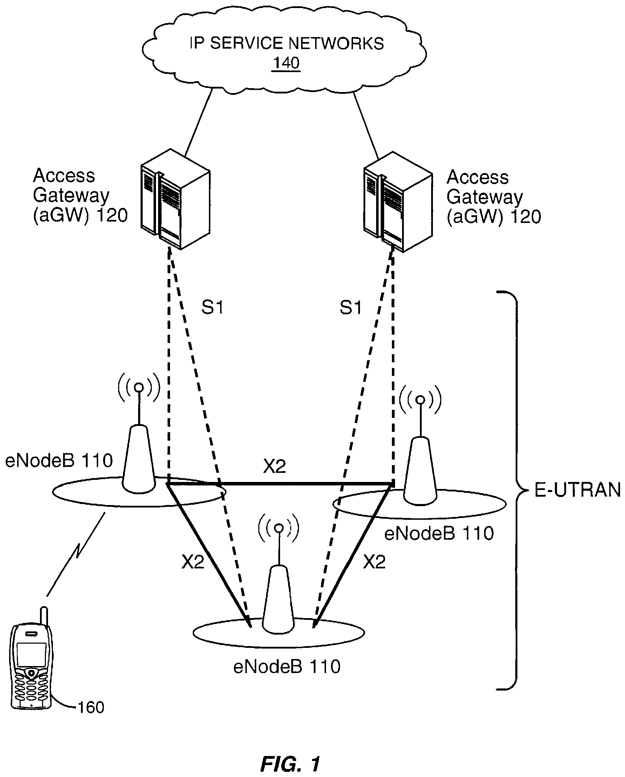

As was noted above, the design and specification of the next generation of wireless communications networks is ongoing within the 3GPP in an effort known as the Long Term Evolution (LTE) initiative. Along with the definition of new wireless interfaces, a new core network architecture is also being defined. This definition is known as System Architecture Evolution (SAE). As shown in Figure 1, an LTE/SAE network includes two types of network elements supporting user and control planes: an enhanced base station 110, called the Evolved NodeB or "eNodeB"; and the Access Gateway (aGW) 120. The eNodeB 110 provides the LTE air interface and radio resource management, while the AGW provides a mobility anchor point for the user plane and provides a gateway to IP Service Networks 140, which may include the Internet, intranets, and other IP-based service networks.

Figure 1 also illustrates a mobile station 160 connected to an eNodeB 110. The terms "mobile station," "wireless terminal," and "mobile terminal," as used herein, are generally synonymous with each other and with the term "user equipment," or "UE," as used by the 3GPP. Those skilled in the art will thus appreciate that these terms may apply to consumer handsets configured for operation with one or more wireless telecommunication standards, such as 3GPP's LTE standards, as well as to wireless cards for use in portable computers or personal digital assistants, wireless modules for use in automotive, telematics, telemetry, or fixed-wireless applications, and the like.

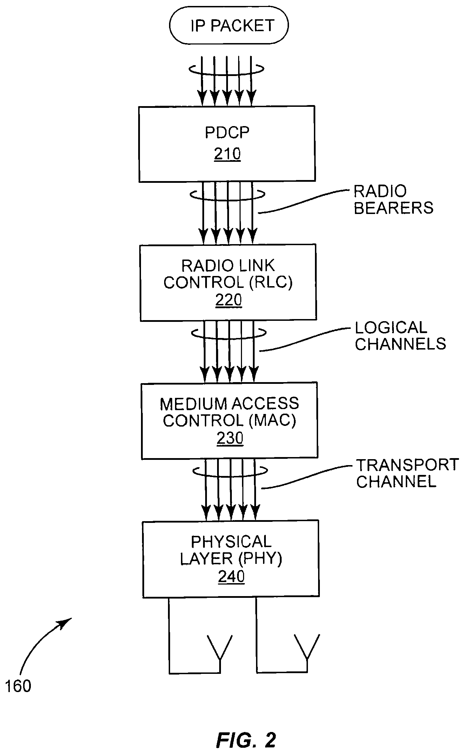

Figure 2 illustrates a general overview of the LTE protocol architecture for the uplink (mobile station to eNodeB) as implemented in an exemplary wireless terminal 160. Other wireless networks may have similar protocol architectures. Data to be transmitted is provided to the Packet Data Convergence Protocol (PDCP layer 210 in the form of IP (Internet Protocol) packets, and is processed by the Radio Link Control (RLC) layer 220, Medium Access Control (MAC) layer 230 and the physical (PHY) layer 240 before being transmitted to the eNodeB as a Single-Carrier Frequency-Division Multiple Access (SC-FDMA) radio signal.

Briefly, the PDCP layer 210 performs IP header compression to reduce the quantity of data that must be transmitted. The PDCP layer 210 may also perform ciphering and integrity protection functions. The RLC layer 220 is responsible for segmentation/concatenation, retransmission handling, and in-sequence delivery to higher layers. Those skilled in the art will note that the RLC layer 220 provides services to the PDCP in the form of radio bearers - thus, an RLC entity is active in a wireless terminal for each configured radio bearer. A radio bearer may be understood as a service providing a defined quality-of-service (QoS) between two points, in this case between the mobile terminal 160 and an eNodeB 110.

Below the RLC layer 220 is the MAC layer 230, which processes logical channels supplied by the RLC layer 220 to produce transport channels transmitted by the PHY layer 240. The MAC layer includes multiplexing and hybrid-ARQ (automatic repeat request) functions, while the PHY layer 240 performs coding and modulation operations. Where multi-antenna transmission is supported, the PHY layer 240 may also perform antenna mapping functions.

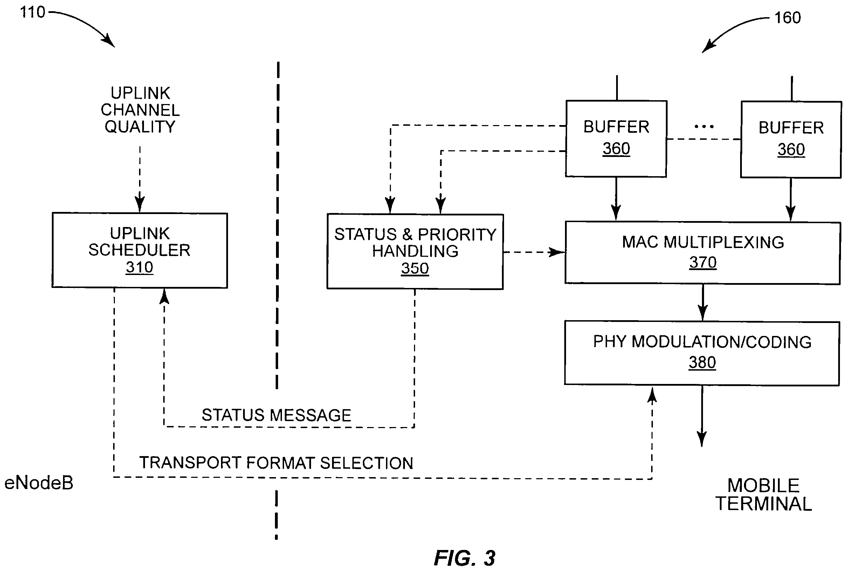

In an LTE system, uplink scheduling is performed at the eNodeB, and dictates when a given mobile terminal 160 may transmit, using which resources, and the modulation and coding scheme that should be used. Thus, as shown in Figure 3, an uplink scheduler function 310 in the eNodeB 110 signals the mobile terminal 160 of a transport format (TF) selection

Uplink scheduling is dynamic, and is performed for each 1-millisecond transmission time interval. As shown in Figure 3, the scheduling may in some instances be based on uplink channel quality information, but is more generally based on status information provided by the several mobile terminals served by the eNodeB 110. Thus, according to some embodiments of the present invention, status information corresponding to several radio bearer buffers 360 is processed by status/priority handling function 350, and signaled to the uplink scheduler 310 in the form of one or more status messages.

Importantly, resources are not granted to the mobile terminal 160 by the uplink scheduler 310 on a per-radio bearer basis. Rather, a single resource grant at a time is provided to a mobile terminal, and the mobile terminal determines for itself which radio bearers should be serviced, and when, based on priorities and/or prioritized bit rates for each radio bearer. Thus, as shown in Figure 3, a MAC multiplexing function 370 may multiplex MAC SDUs (service data units) from one or more of the radio bearer buffers 360 into a single MAC PDU for modulation and coding at PHY modulation/coding function 350. This multiplexing is generally performed so that each radio bearer is served in priority order, up to its prioritized bit rate, based on priority information provided by status and priority handling function 350.

Those skilled in the art will appreciate that uplink scheduler 310 could operate most efficiently if it had status information for every radio bearer buffer 360 in every mobile terminal served by the eNodeB. However, as was discussed above, signaling such complete information requires uplink resources that may be in scarce supply under some circumstances. Furthermore, especially in a heavily-loaded system, such data may become obsolete before it is used by the uplink scheduler 310. On the other hand, the use of "happy bits," which provide only coarse status information, e.g., whether the mobile terminal has data queued for transmission or not, may not provide enough information for optimal scheduling, especially when data is buffered for multiple radio bearers having different priorities.

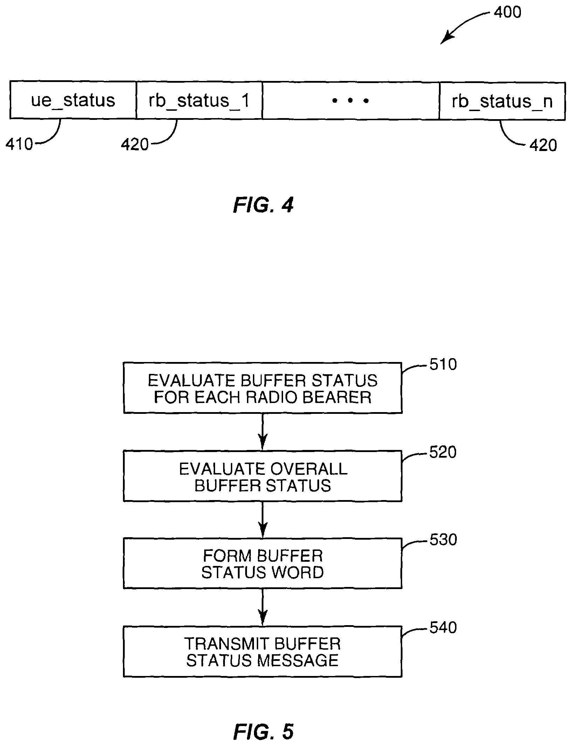

Thus, Figure 4 illustrates an exemplary compressed buffer status word 400, according to some embodiments of the present invention, that may be used to provide status information related to a mobile terminal's overall status as well as buffer status for one or more specific radio bearers, or groups of radio bearers. As will be described more fully below, this buffer status word may in some embodiments be transmitted in-band, e.g., as header data in one or more data packets.

The buffer status word 400 pictured in Figure 4 includes a user equipment status field 410, designated "ue_status" in Figure 4. The ue_status field 410 indicates buffer status for the entire mobile terminal, i.e., for all or substantially all of the uplink data buffers for the terminal. In some embodiments, this may be done with just one or more bits, although more may be used in some circumstances. The buffer status word 400 also includes one or more radio bearer status fields 420, designated in Figure 4 as rb_status_1 to rb_status_1. In some embodiments, each rb_status field 420 indicates the current buffer status for one specific bearer, e.g., for the highest priority radio bearers of the mobile terminal, although an rb_status field 420 may in some cases correspond to a group of radio bearers. In either case, each rb_status field 420 may typically include one or two bits, although more may be used.

The one or more bits in ue_status field 410 may be encoded in various ways to signal the overall status of the mobile terminal's buffers. For instance, a single bit may be used to provide an indication that the mobile terminal needs more resources. In some embodiments, a ue_status bit may indicate simply that some data is buffered. In other embodiments, a ue_status bit might indicate that the total amount of data buffered exceeds the currently scheduled transport format size. In yet other embodiments, two or more ue_status bits might be encoded to signal a total quantity of data buffered in the mobile terminal. In some of these embodiments, the ue_status bits might indicate an absolute quantity of data, while in others, the ue_status bits might signal a quantity relative to the transport format of the current transmission.

The rb_status fields 420 may be encoded in similar ways, although the rb_status fields 420 need not be encoded in the same manner as the ue_status field 410. (Likewise, multiple rb_status fields 420 may be encoded differently, in some embodiments). As noted above, each rb_status field 420 may correspond to a specific radio bearer, or to a group of radio bearers, as well as to their respective priority levels. This association may in some instances be configurable, e.g., by a Radio Resource Control (RRC) protocol. Thus, one or more rb_status fields 420 may signal, for instance: whether there is data in the buffers for the radio bearer(s) with the priority associated to the rb_status field 420; whether the mobile terminal 160 needs more (or fewer) resources for the radio bearer(s) for the next resource assignment; whether the prioritized bit rate (PBR) for the radio bearer(s) is currently fulfilled; or whether the level of the bucket size approaches the maximum bucket size ("unhappy" - the mobile terminal needs resources) or the minimum bucket size (typically zero - the mobile terminal does not need to transmit), for a mechanism based on token buckets to enforce PBR and Maximum Bit Rate (MBR) schemes.

In some embodiments, some or all of the above information may be encoded relative to the previous buffer report (whether or not the previous buffer report was a compressed buffer report or a more detailed status report), or relative to a scheduling grant (e.g., the current grant). In some embodiments, the information may take into account the data included in the current transmission, such that the data sent in the current transmission is no longer considered to be in the corresponding buffer for the purposes of the buffer status report update.

In view of the preceding, Figure 5 illustrates a general method for providing buffer status information from a mobile station to a wireless base station. Although the method of Figure 5 may be practiced in an LTE-capable mobile station, the method may also be implemented in wireless terminals compatible with other wireless communication protocols, where signaling of buffer status for multiple logical channels/radio bearers is necessary or desirable.

In any event, the method pictured in Figure 5 begins, as shown at block 510, with the evaluation of buffer status for each of one or more radio bearers active in the mobile station. In some embodiments this evaluation may comprise simply determining whether any data is queued in each radio bearer buffer. In others, this evaluation may comprise determining a quantity of data queued in each buffer and, in some embodiments, comparing this quantity to one or more pre-determined reference quantities or to a current or scheduled transport format size.

At block 520, the overall buffer status for the mobile station is evaluated. Again, this evaluation may be as simple as determining whether any data is queued at all, or may comprise a more complex evaluation of the quantity of data currently buffered, either in absolute or relative terms.

At block 530, a buffer status word is formed, based on the evaluations of the overall buffer status and radio bearer buffer status. In some embodiments, as described above, the buffer status word may comprise one or more radio bearer status fields indicating buffer status for corresponding radio bearers; each radio bearer status fields may be encoded according to any of a variety of methods, including those described above. Thus, one or more of the radio bearer status fields may be encoded to indicate a relative status compared to a previously reported status, or relative to a current or scheduled transport format size, i.e., relative to a previously granted resource allocation. In some embodiments, a radio bearer status field may correspond to a group of radio bearers, where the radio bearer status field indicates the overall buffer status for that group.

In any event, the buffer status word may further comprise a user equipment status field, which indicates a status corresponding to all or substantially all of the radio bearers. In some embodiments, one or more low priority bearers may be ignored in the evaluation of the user equipment status, and thus not accounted for in the user equipment status field. In some embodiments, buffered data for radio bearers corresponding to one or more radio bearer status fields may be omitted from the user equipment status, so that the user equipment status field indicates the total amount of data buffered in the mobile station less the buffered data associated with the radio bearers or groups of radio bearers corresponding to the radio bearer status fields.

Finally, as shown at block 540, the buffer status word is transmitted to the base station for use in scheduling subsequent uplink transmissions. As will be discussed in more detail, the buffer status word may be transmitted "in-band," e.g., as part of one or more MAC PDUs. In some embodiments, the buffer status word may be transmitted as header data in one or more data packets or control packets; in some cases this header data might comprise one or more fields in a MAC header or subheader for a MAC packet data unit. In others, this header data might comprise a MAC control element in a MAC packet data unit. Those skilled in the art will thus appreciate that in some embodiments the buffer status word may be split for transmission, so that it is transmitted in several noncontiguous parts.

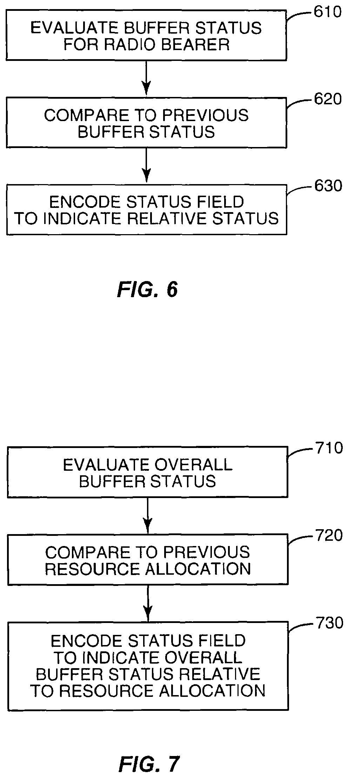

Figures 6 and 7 illustrate additional details for encoding a radio bearer status and user equipment status field, respectively, according to some embodiments of the invention. The method of Figure 6 begins at block 610, with the evaluation of buffer status for a given radio bearer (or group of radio bearers). In the embodiment pictured in Figure 6, the corresponding radio buffer status field is to be encoded to indicate a relative buffer status, compared to a previously reported buffer status. Thus, the current status (e.g., the current quantity of buffered data for the radio bearer) is compared to a previously reported status, as shown at block 620. At block 630, the corresponding radio buffer status field is encoded to indicate this relative status. Those skilled in the art will recognize that various encoding schemes are possible. For instance, assuming a two-bit status field, one value (e.g., 00) might indicate a reduced buffer status, or an empty buffer. Another value (e.g., 01) might indicate that the status is unchanged relative to the previously reported buffer status. A third value (e.g., 10) might indicate that the buffer currently holds twice as much data as previously reported, while a fourth value (e.g., 11) might indicate that the buffer currently holds four times as much data as previously reported. Of course, any number of alternative meanings might be attached to one or more bits of a radio bearer status field to indicate the relative status of the buffer compared to a previously reported status.

Similarly, the method of Figure 7 begins at block 710, with the evaluation of buffer status for all (or substantially all) radio bearers for the mobile station. However, in this embodiment, the corresponding user equipment status field is to be encoded to indicate a relative buffer status, compared to a previous resource allocation, rather than a previously reported status. Thus, the current status (e.g., the current quantity of buffered data for the radio bearer) is compared to a previous resource grant, as shown at block 720. This may comprise comparing the total quantity of buffered data to a current or scheduled transport format size. (In some embodiments, the total quantity of buffered data less data accounted for by radio bearer status fields may be used.) At block 730, the user equipment status field is encoded to indicate the overall buffer status compared to the resource allocation. Again, those skilled in the art will recognize that various encoding schemes are possible. For instance, assuming a two-bit status field, one value (e.g., 00) might indicate the previous resource allocation is sufficient to meet the current needs of the mobile station. Another value (e.g., 01) might indicate that the total buffered data amounts to twice the current transport format, while a third value (e.g., 10) might indicate that the buffer currently holds four times as much data as can be carried according to the current resource grant.

As noted above, the compressed buffer status report may be transmitted as header data in a data packet or control packet. In some embodiments, this header data may comprise one or more fields in a MAC header or MAC sub-header for a MAC packet data unit. For LTE systems, the MAC PDU format is defined by the 3GPP's in "Evolved Universal Terrestrial Radio Access (E-UTRA); Medium Access Control (MAC) protocol specification," TS 36.321 MAC specifications, v. 8.0.0, dated December 20, 2007. According to this specification:
*A MAC PDU consists of a MAC header, zero or more MAC Service Data Units (MAC SDU), zero or more MAC Control elements, and optionally padding. A MAC PDU sub-header corresponding to a MAC SDU consists of the six header fields LCID*/*E*/*R*/*R*/*F*/*L* ... *but for the last sub-header in the MAC PDU, which consists solely of the four header fields LCID*/*E*/*R*/*R* ...
*A MAC PDU sub-header corresponding to a MAC Control element consists of the six header fields LC*/*D*/*E*/*R*/*R*/*F*/*L, but for the last sub-header in the MAC PDU and for fixed sized MAC Control elements, which consist solely of the four header fields LCID*/*E*/*R*/*R.*
*A MAC PDU sub-header corresponding to padding consists of the four header fields LCID*/*E*/*R*/*R.*
*MAC PDU sub-headers have the same order as the corresponding MAC SDUs, MAC Control elements and padding.*
*MAC Control elements are always placed before any MAC SDU and padding occurs at the end of the MAC PDU.*

In some embodiments of the present invention, a compressed buffer report as described above can be placed in the MAC PDU header or in a MAC sub-header, or transmitted as a MAC control element. The compressed buffer status report may thus be mapped to the MAC PDU in a number of ways, including, but not limited to, those described below.

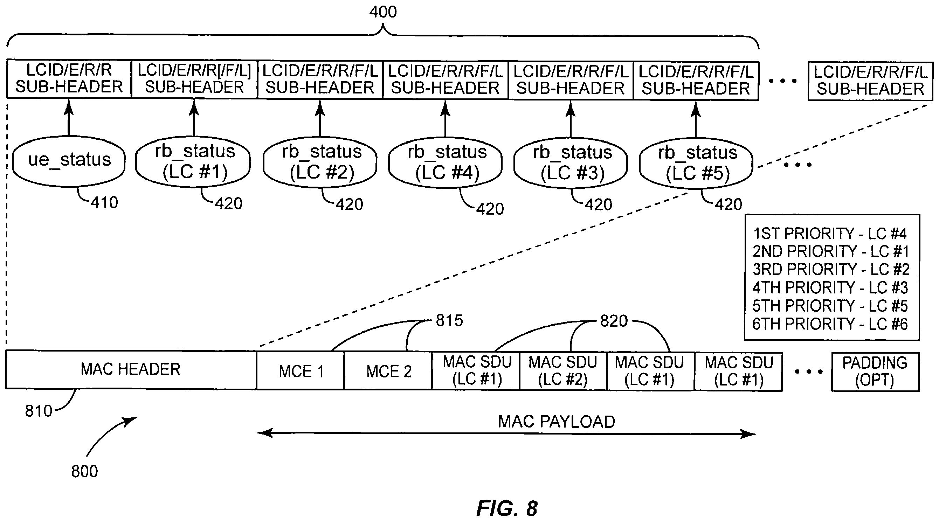

In some embodiments, a compressed buffer status report may be placed in the MAC header for transmission to the eNodeB. An example of the mapping of a buffer status word 400 to a MAC PDU 800 is illustrated in Figure 8. Thus, as shown, the buffer status word 400 may occur in the MAC header 810, before any sub-header. In these embodiments, the ue_status field 410 is placed at a pre-determined location in the MAC header 810. For example, it may be predetermined (or determined via RRC configuration) that the ue_status field 410 always comes first (as in the pictured embodiment) or last in the compressed report.

Each of one or more rb_status fields 420, each of which may comprise a pre-determined number of bits (e.g., 1 or 2 bits), may be ordered by relative priority between radio bearers and/or between groups of radio bearers. For instance, in some embodiments, the rb_status field 420 corresponding to the highest priority bearer or group may come first. In some embodiments, in the event that the number of bearers or groups of bearers exceeds the number of available rb_status fields 420, then differential coding may be used to determine the amount of buffer data for the remaining lowest priority bearers using the UE status less the sum of all data reported using the rb_status fields 420. Alternatively, the last rb_status field 420 can be used to convey this information.

In other embodiments, the buffer status word may be transmitted using MAC sub-headers. In some embodiments, the buffer status word may be distributed across several sub-headers. For example, the ue_status field 410 may be conveyed in the first MAC sub-header, while one or more rb_status fields 420 are conveyed in the MAC sub-headers for each of several MAC SDUs 820. These fields may be mapped to the "R/R" (reserved) sub-header bits described above.

In some cases, there will be only one MAC SDU 820 in the MAC PDU 800, and correspondingly only one sub-header in the MAC PDU 800. In this instance, only one rb_status field 420, perhaps corresponding to the bearer (or group of bearers) for the current transmission will be sent in the MAC PDU 800 in some embodiments. In other instances, when more than one MAC SDUs 820 (and corresponding sub-headers) are present in the MAC PDU 800, then each sub-header (except perhaps the last one) may add information building on top of previous information.

As of the date of the previously-mentioned 3GPP MAC specification, there are two spare bits in the MAC sub-header format. Thus, in an alternative mapping of the buffer status word to the MAC PDU 800, a one- or two-bit ue_status field 410 is mapped to a first sub-header, while the second and any subsequent subheaders carry one- or two-bit rb_status fields for the logical channels (radio bearers) corresponding to the MAC SDUs 820 present in the current MAC PDU 800. These may be in decreasing priority order. In these embodiments, only one rb_status field 420 is reported per logical channel.

In some of these embodiments, if further subheaders are available when rb_status fields 420 corresponding to each radio bearer represented by the MAC SDUs 820 present in the current MAC PDU 800, then the remaining subheaders may carry rb_status fields 420 for logical channels/radio bearers not already reported, in decreasing priority order.

Those skilled in the art will appreciate that in the embodiments described above, rb_status may be reported per Radio Bearer (RB) or Logical Channel (LC). In alternative embodiments, rb_status may be reported per Radio Bearer Group (RBG). In yet another embodiment, rb_status can be configured, e.g., using RRC configuration, to be reported per RB or RBG. Further, for each of the reporting formats described above, the information sent may also be bound to the prioritized bit rate (PBR), where some data in the buffer may be present, but cannot currently be scheduled.

In still other embodiments, the buffer status words described above may be delivered as a MAC control element (MCE) 815, as pictured in Figure 8. Those skilled in the art will appreciate that in some cases, one or more of the combinations of buffer status word bits described above may be used instead of padding, or even instead of data from a low priority radio bearer, in the event that the buffer status word fits within the available space. Thus, the use of any of the buffer status word formats described above is not restricted to the MAC header 810, sub-header, or control elements 815 described above. Rather, any of these buffer status word formats may be transmitted at other times, e.g. when space is available, or when an updated buffer status word is deemed to take priority over some other type of data.

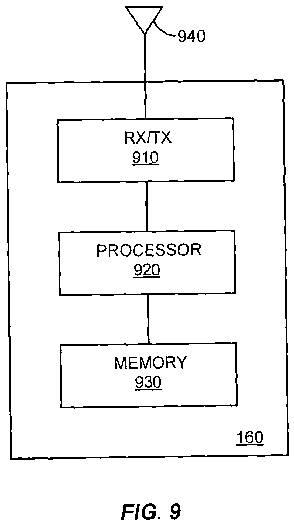

Some embodiments of the present invention comprise a mobile station including a processing circuits configured to carry out one or more of the methods described above. As shown in Figure 9, an exemplary mobile station 160 may comprise a radio transceiver 910, a processing circuit 920, and a memory circuit 930. Radio transceiver 910 includes receiver (RX) and transmitter (TX) circuits, and may be configured to transmit and receive radio signals according to one or more wireless telecommunication and/or networking standards, such as the 3GPP family of specifications, using antenna 940. In addition to being configured to carry out one or more of the methods described herein, processing circuit 920, which may comprise one or more microprocessors, microcontrollers, digital signal processors, application-specific integrated circuits, digital hardware, and the like, may also be configured to implement telecommunications and/or networking protocols, to control user interface functions, and to provide overall control of the mobile station 160. Those skilled in the art will appreciate that in some embodiments processing circuit 920 may be configured to execute software and/or firmware stored in memory 930, which may include one or more random-access memory (RAM) devices and read-only memory (ROM) devices.

In particular, processing circuit 920 may be configured to determine the status of one or more transmit buffers, such as buffers corresponding to radio bearers or logical channels, to prepare a buffer status message, and to transmit the buffer status message to a base station using transceiver 910. In some embodiments, the buffer status message may comprise, as described above, one or more radio bearer status fields indicating uplink buffer status for corresponding radio bearers or groups of radio bearers and a user equipment status field indicating an overall status corresponding to all or substantially all of the uplink data buffers for the mobile station. In some cases, the radio bearer status fields may comprise two or more fields corresponding to the highest priority radio bearers or radio bearer groups for the mobile station; these fields may be ordered according to a pre-determined priority order, e.g., from highest to lowest priority.

In some embodiments, the user equipment status field may be encoded by the processing circuit 920 to indicate the total quantity of data buffered in the mobile station 160, while in others processing circuit 920 may instead encode the user equipment status field to indicate the total quantity of data buffered in the mobile station less the buffered data associated with radio bearers or groups of radio bearers corresponding to the radio bearer status fields. In some embodiments, processing circuit 920 may be configured to encode one or more of the user equipment status field and the radio bearer status fields to indicate a relative status compared to a previously reported status, or to indicate a relative status compared to a previously granted resource allocation.

Furthermore, the processing circuit 920 of mobile station 160 may be configured to transmit the buffer status message to a base station as header data in one or more data packets or control packets. In some embodiments, this header data may comprise one or more fields in a MAC header for a MAC packet data unit. In some embodiments, the header data may comprise one or more fields in a MAC sub-header, or may comprise a MAC control element.

The present invention may, of course, be carried out in other ways than those specifically set forth herein without departing from essential characteristics of the invention. The present embodiments are thus to be considered in all respects as illustrative and not restrictive.

## Claims

1. A method for providing buffer status information from a mobile station (160), the method comprising preparing (530) a buffer status message (400) and transmitting (540) the buffer status message (400) to a base station (110), **characterized in that** the buffer status message (400) comprises a buffer status word transmitted as header data in a header of a Data Packet Unit, PDU, said PDU comprising zero or more Service Data Units, SDUs, wherein the buffer status word includes:
one or more radio bearer status fields (420) indicating uplink buffer status for radio bearers or groups of radio bearers corresponding to SDUs comprised in said PDU ; and
a user equipment status field (410) indicating an overall status corresponding to all of the uplink data buffers for the mobile station (160).

2. The method of claim 1, **characterized in that** the one or more radio bearer status fields (420) comprise at least two fields corresponding to the highest priority radio bearers or radio bearer groups for the mobile station (160).

3. The method of claim 2, **characterized in that** the at least two fields are ordered according to a pre-determined priority order.

4. The method of any of claims 1-3, **characterized in that** the user equipment status field (410) indicates the total quantity of data buffered in the mobile station (160).

5. The method of any of claims 1-3, **characterized in that** the user equipment status field (410) indicates the total quantity of data buffered in the mobile station (160) less the buffered data associated with the radio bearers or groups of radio bearers corresponding to the radio bearer status fields (420).

6. The method of any of claims 1-5, **characterized in that** preparing (530) the buffer status message (400) comprises encoding (630) at least one of the user equipment status field (410) and the radio bearer status fields (420) to indicate a relative status compared to a previously reported status.

7. The method of any of claims 1-6, **characterized in that** preparing (530) the buffer status message (400) comprises encoding (730) at least one of the user equipment status field (410) and the radio bearer status fields (420) to indicate a relative status compared to a previously granted resource allocation.

8. The method of any of claims 1-7, **characterized in that** transmitting (540) the buffer status message (400) to a base station (110) comprises transmitting the buffer status message (400) as header data in one or more data packets or control packets.

9. The method of claim 8, **characterized in that** the header data comprises one or more fields in a medium-access control, MAC, header (810) for a MAC packet data unit (800).

10. The method of claim 8 or 9, **characterized in that** the header data comprises one or more fields in a MAC sub-header for a MAC packet data unit (800).

11. The method of any of claims 8-10, **characterized in that** the header data comprises a MAC control element (815) in a MAC packet data unit (800).

12. A mobile station (160) comprising a processing circuit (920) configured to determine the status of one or more transmit buffers and a transmitter circuit (910) configured to transmit buffer status to a base station, **characterized in that** the processing circuit (920) is configured to prepare a buffer status message (400) comprising a buffer status word transmitted as header data in a MAC header of a Data Packet Unit, PDU, said PDU comprising zero or more Service Data Units, SDUs, wherein the buffer status word includes:
one or more radio bearer status fields (420) indicating uplink buffer status for radio bearers or groups of radio bearers corresponding to SDUs comprised in said PDU; and
a user equipment status field (410) indicating an overall status corresponding to all of the uplink data buffers for the mobile station (160).

13. The mobile station (160) of claim 12, **characterized in that** the processing circuit (920) is configured to encode at least one of the user equipment status field (410) and the radio bearer status fields (420) to indicate a relative status compared to a previously reported status.

14. The mobile station (160) of claims 12 or 13, **characterized in that** the processing circuit (920) is configured to encode at least one of the user equipment status field (410) and the radio bearer status fields (420) to indicate a relative status compared to a previously granted resource allocation.

15. The mobile station (160) of any of claims 12-14, **characterized in that** the transmitter circuit is configured to transmit the buffer status message (400) to a base station (110) as header data in one or more data packets or control packets.

## Patentansprüche

1. Verfahren zur Bereitstellung von Zwischenspeicherstatusinformation von einer Mobilstation (160), wobei das Verfahren umfasst: Erstellen (530) einer Zwischenspeicherstatusnachricht (400) und Übertragen (540) der Zwischenspeicherstatusnachricht (400) zu einer Basisstation (110), **dadurch gekennzeichnet, dass** die Zwischenspeicherstatusnachricht (400) ein Zwischenspeicherstatuswort umfasst, das als Header-Daten in einem Header einer Paketdateneinheit, PDU, übertragen wird, wobei die PDU null oder mehr Dienstdateneinheiten, SDUs, umfasst, worin das Zwischenspeicherstatuswort aufweist:
ein oder mehrere Funkträgerstatusfelder (420), die den Aufwärtsstrecken-Zwischenspeicherstatus für Funkträger oder Gruppen von Funkträgern angeben, die in der PDU enthaltenen SDUs entsprechen; und
ein Benutzereinrichtungsstatusfeld (410), das einen Gesamtstatus angibt, der allen Aufwärtsstrecken-Datenzwischenspeichern für die Mobilstation (160) entspricht.

2. Verfahren nach Anspruch 1, **dadurch gekennzeichnet, dass** das eine oder die mehreren Funkträgerstatusfelder (420) mindestens zwei Felder umfassen, die den Funkträgern oder Gruppen von Funkträgern für die Mobilstation (160) mit der höchsten Priorität entsprechen.

3. Verfahren nach Anspruch 2, **dadurch gekennzeichnet, dass** die mindestens zwei Felder gemäß einer vorbestimmten Prioritätsreihenfolge geordnet sind.

4. Verfahren nach einem der Ansprüche 1 bis 3, **dadurch gekennzeichnet, dass** das Benutzereinrichtungsstatusfeld (410) die Gesamtmenge der in der Mobilstation (160) zwischengespeicherten Daten angibt.

5. Verfahren nach einem der Ansprüche 1 bis 3, **dadurch gekennzeichnet, dass** das Benutzereinrichtungsstatusfeld (410) die Gesamtmenge der in der Mobilstation (160) zwischengespeicherten Daten ohne diejenigen zwischengespeicherten Daten angibt, die den Funkträgern oder Gruppen von Funkträgern zugeordnet sind, die den Funkträgerstatusfeldern (420) entsprechen.

6. Verfahren nach einem der Ansprüche 1 bis 5, **dadurch gekennzeichnet, dass** das Erstellen (530) der Zwischenspeicherstatusnachricht (400) umfasst: Codieren (630) von mindestens einem des Benutzereinrichtungsstatusfeldes (410) und der Funkträgerstatusfelder (420), um einen relativen Status im Vergleich zu einem vorher gemeldeten Status anzugeben.

7. Verfahren nach einem der Ansprüche 1 bis 6, **dadurch gekennzeichnet, dass** das Erstellen (530) der Zwischenspeicherstatusnachricht (400) umfasst: Codieren (730) von mindestens einem des Benutzereinrichtungsstatusfeldes (410) und der Funkträgerstatusfelder (420), um einen relativen Status im Vergleich zu einer vorher bewilligten Ressourcenzuteilung anzugeben.

8. Verfahren nach einem der Ansprüche 1 bis 7, **dadurch gekennzeichnet, dass** das Übertragen (540) der Zwischenspeicherstatusnachricht (400) zu einer Basisstation (110) umfasst: Übertragen der Zwischenspeicherstatusnachricht (400) als Header-Daten in einem oder mehreren Datenpaketen oder Steuerungspaketen.

9. Verfahren nach Anspruch 8, **dadurch gekennzeichnet, dass** die Header-Daten ein oder mehrere Felder in einem Header (810) der Medienzugriffssteuerung, MAC, für eine MAC-Paketdateneinheit (800) umfassen.

10. Verfahren nach Anspruch 8 oder 9, **dadurch gekennzeichnet, dass** die Header-Daten ein oder mehrere Felder in einem MAC-Teilheader für eine MAC-Paketdateneinheit (800) umfassen.

11. Verfahren nach einem der Ansprüche 8 bis 10, **dadurch gekennzeichnet, dass** die Header-Daten ein MAC-Steuerungselement (815) in einer MAC-Paketdateneinheit (800) umfassen.

12. Mobilstation (160), umfassend eine Verarbeitungsschaltung (920), die dafür konfiguriert ist, den Status von einem oder mehreren Sendezwischenspeichern zu bestimmen, und eine Senderschaltung (910), die dafür konfiguriert ist, Zwischenspeicherstatus zu einer Basisstation zu übertragen, **dadurch gekennzeichnet, dass** die Verarbeitungsschaltung (920) dafür konfiguriert ist, eine Zwischenspeicherstatusnachricht (400) zu erstellen, die ein Zwischenspeicherstatuswort umfasst, das als Header-Daten in einem MAC-Header einer Paketdateneinheit, PDU, übertragen wird, wobei die PDU null oder mehr Dienstdateneinheiten, SDUs, umfasst, worin das Zwischenspeicherstatuswort aufweist:
ein oder mehrere Funkträgerstatusfelder (420), die den Aufwärtsstrecken-Zwischenspeicherstatus für Funkträger oder Gruppen von Funkträgern angeben, die in der PDU enthaltenen SDUs entsprechen; und
ein Benutzereinrichtungsstatusfeld (410), das einen Gesamtstatus angibt, der allen Aufwärtsstrecken-Datenzwischenspeichern für die Mobilstation (160) entspricht.

13. Mobilstation (160) nach Anspruch 12, **dadurch gekennzeichnet, dass** die Verarbeitungsschaltung (920) dafür konfiguriert ist, mindestens eines des Benutzereinrichtungsstatusfeldes (410) und der Funkträgerstatusfelder (420) zu codieren, um einen relativen Status im Vergleich zu einem vorher gemeldeten Status anzugeben.

14. Mobilstation (160) nach Anspruch 12 oder 13, **dadurch gekennzeichnet, dass** die Verarbeitungsschaltung (920) dafür konfiguriert ist, mindestens eines des Benutzereinrichtungsstatusfeldes (410) und der Funkträgerstatusfelder (420) zu codieren, um einen relativen Status im Vergleich zu einer vorher bewilligten Ressourcenzuteilung anzugeben.

15. Mobilstation (160) nach einem der Ansprüche 12 bis 14, **dadurch gekennzeichnet, dass** die Senderschaltung dafür konfiguriert ist, die Zwischenspeicherstatusnachricht (400) als Header-Daten in einem oder mehreren Datenpaketen oder Steuerungspaketen zu einer Basisstation (110) zu übertragen.

## Revendications

1. Procédé de fourniture d'informations d'état de mémoire tampon à partir d'une station mobile (160), le procédé comportant l'étape consistant à préparer (530) un message d'état de mémoire tampon (400) et à transmettre (540) le message d'état de mémoire tampon (400) à une station de base (110), **caractérisé en ce que** le message d'état de mémoire tampon (400) comprend un mot d'état de mémoire tampon transmis sous la forme de données d'en-tête dans un en-tête d'une unité de données en paquets, PDU, ladite unité PDU ne comprenant aucune ou comprenant plusieurs unités de données de service, SDU, dans lequel le mot d'état de mémoire tampon inclut :
un ou plusieurs champs d'état de porteuse radio (420) indiquant un état de mémoire tampon de liaison montante pour des porteuses radio ou des groupes de porteuses radio correspondant à des unités SDU incluses dans ladite unité PDU ; et
un champ d'état d'équipement d'utilisateur (410) indiquant un état global correspondant à la totalité des mémoires tampons de données de liaison montante pour la station mobile (160).

2. Procédé selon la revendication 1, **caractérisé en ce que** ledit un ou lesdits plusieurs champs d'état de porteuse radio (420) comportent au moins deux champs correspondant à des porteuses radio ou groupes de porteuses radio de la plus haute priorité pour la station mobile (160).

3. Procédé selon la revendication 2, **caractérisé en ce que** lesdits au moins deux champs sont ordonnés selon un ordre de priorité prédéterminé.

4. Procédé selon l'une quelconque des revendications 1 à 3, **caractérisé en ce que** le champ d'état d'équipement d'utilisateur (410) indique la quantité totale de données mises en mémoire tampon dans la station mobile (160).

5. Procédé selon l'une quelconque des revendications 1 à 3, **caractérisé en ce que** le champ d'état d'équipement d'utilisateur (410) indique la quantité totale de données mises en mémoire tampon dans la station mobile (160), moins les données mises en mémoire tampon associées aux porteuses radio ou groupes de porteuses radio correspondant aux champs d'état de porteuse radio (420).

6. Procédé selon l'une quelconque des revendications 1 à 5, **caractérisé en ce que** l'étape consistant à préparer (530) le message d'état de mémoire tampon (400) comprend l'étape consistant à coder (630) au moins l'un des champs parmi le champ d'état d'équipement d'utilisateur (410) et les champs d'état de porteuse radio (420), en vue d'indiquer un état relatif par rapport à un état signalé précédemment.

7. Procédé selon l'une quelconque des revendications 1 à 6, **caractérisé en ce que** l'étape consistant à préparer (530) le message d'état de mémoire tampon (400) comprend l'étape consistant à coder (730) au moins l'un des champs parmi le champ d'état d'équipement d'utilisateur (410) et les champs d'état de porteuse radio (420), en vue d'indiquer un état relatif par rapport à une affectation de ressources octroyée précédemment.

8. Procédé selon l'une quelconque des revendications 1 à 7, **caractérisé en ce que** l'étape de transmission (540) du message d'état de mémoire tampon (400) à une station de base (110) consiste à transmettre le message d'état de mémoire tampon (400) sous la forme de données d'en-tête dans un ou plusieurs paquets de données ou paquets de commande.

9. Procédé selon la revendication 8, **caractérisé en ce que** les données d'en-tête comportent un ou plusieurs champs dans un en-tête de contrôle d'accès au support, MAC, (810) pour une unité de données en paquets MAC (800).

10. Procédé selon la revendication 8 ou 9, **caractérisé en ce que** les données d'en-tête comportent un ou plusieurs champs dans un sous-en-tête de contrôle MAC pour une unité de données en paquets MAC (800).

11. Procédé selon l'une quelconque des revendications 8 à 10, **caractérisé en ce que** les données d'en-tête comportent un élément de contrôle MAC (815) dans une unité de données en paquets MAC (800).

12. Station mobile (160) comprenant un circuit de traitement (920) configuré de manière à déterminer l'état d'une ou plusieurs mémoires tampons de transmission, et un circuit de transmission (910) configuré de manière à transmettre un état de mémoire tampon à une station de base, **caractérisé en ce que** le circuit de traitement (920) est configuré de manière à préparer un message d'état de mémoire tampon (400) comprenant un mot d'état de mémoire tampon transmis sous la forme de données d'en-tête dans un en-tête MAC d'une unité de données en paquets, PDU, ladite unité PDU ne comprenant aucune ou comprenant plusieurs unités de données de service, SDU, dans lequel le mot d'état de mémoire tampon inclut :
un ou plusieurs champs d'état de porteuse radio (420) indiquant un état de mémoire tampon de liaison montante pour des porteuses radio ou des groupes de porteuses radio correspondant à des unités SDU incluses dans ladite unité PDU ; et
un champ d'état d'équipement d'utilisateur (410) indiquant un état global correspondant à la totalité des mémoires tampons de données de liaison montante pour la station mobile (160).

13. Station mobile (160) selon la revendication 12, **caractérisée en ce que** le circuit de traitement (920) est configuré de manière à coder au moins l'un des champs parmi le champ d'état d'équipement d'utilisateur (410) et les champs d'état de porteuse radio (420), en vue d'indiquer un état relatif par rapport à un état signalé précédemment.

14. Station mobile (160) selon la revendication 12 ou 13, **caractérisée en ce que** le circuit de traitement (920) est configuré de manière à coder au moins l'un des champs parmi le champ d'état d'équipement d'utilisateur (410) et les champs d'état de porteuse radio (420), en vue d'indiquer un état relatif par rapport à une affectation de ressources octroyée précédemment.

15. Station mobile (160) selon l'une quelconque des revendications 12 à 14, **caractérisée en ce que** le circuit de transmission est configuré de manière à transmettre le message d'état de mémoire tampon (400) à une station de base (110) sous la forme de données d'en-tête dans un ou plusieurs paquets de données ou paquets de commande.
